# EUROPÄISCHE PATENTSCHRIFT

(11) **EP 1 163 835 B1**
(45) Veröffentlichungstag und Bekanntmachung des Hinweises auf die Patenterteilung: **20.12.2006**
(21) Anmeldenummer: 01111886.6
(22) Anmeldetag: 17.05.2001
(51) Int. Cl.: A01F 12/44

(54) **Abscheidevorrichtung bei Mähdreschern**
Separating device for combine
Dispositif de séparation pour moissonneuses-batteuses

(30) Priorität: 15.06.2000 DE 10028778
(43) Veröffentlichungstag der Anmeldung: 19.12.2001
(73) Patentinhaber: CLAAS Selbstfahrende Erntemaschinen GmbH, 33428 Harsewinkel (DE)
(72) Erfinder: Schwersmann, Berthold, 49186 Bad Iburg (DE)

(56) Entgegenhaltungen:
- EP-A- 0 281 383
- DE-A- 2 751 842
- DE-A- 3 626 046
- FR-A- 910 279
- FR-A- 1 522 900
- FR-A- 2 570 573
- GB-A- 2 335 837
- NL-A- 7 900 185

## Beschreibung

Die Erfindung betrifft eine Vorrichtung zum Abscheiden von Korn aus einer Erntegutmatte, bestehend aus einem Rotor und einem diesen bereichsweise und mit Abstand umgebenden Abscheidekorb, der zumindest zwei bogenförmige Rahmenteile aufweist, die miteinander über parallel zur Rotorachse sich erstreckende Stützelemente verbunden sind, zwischen denen quer zur Rotorachse und mit Abstand zueinander verlaufende Stege eine Siebfläche bilden.

Eine derartige Vorrichtung ist beispielsweise aus der holländischen Offenlegungsschrift 7900185 bekannt. Die Stege des Abscheidekorbes laufen bei dieser Vorrichtung frei aus und sind in Richtung zur Rotorachse abgebogen, so dass die hierdurch gebildete Führungsfläche des Abscheidekorbes für die Gutmatte einen stufenförmigen Verlauf erhält. Dieser stufenförmige Verlauf bewirkt, dass hierdurch die Gutmatte aufgelockert und die Restkornausscheidung begünstigt wird. Als nachteilig hat es sich jedoch herausgestellt, dass die frei im Raum stehenden Enden der Stege insbesondere bei sehr trockenem Erntegut eine überhöhte Zerkleinerung des Halmgutes bewirken, was unvermeidlich zu Überlastungen in der anschließenden Siebreinigung führt. Dies hat erheblich Kornverluste zur Folge. Ein weiterer Nachteil ist darin zu sehen, dass die frei auslaufenden Stege sehr stabil ausgeführt werden müssen, um unkontrollierte Schwingungen zu vermeiden. Hieraus ergeben sich relativ hohe Kosten.

Der vorliegenden Erfindung liegt daher die Aufgabe zugrunde, eine Vorrichtung der eingangs näher bezeichneten Art derart auszugestalten, dass trotz einwandfreier Auflockerung der Gutmatte eine überhöhte Zerkleinerung des Gutes mit Sicherheit vermieden wird. Zudem soll die Vorrichtung wirtschaftlich und kostengünstig gefertigt werden können.

Diese Aufgabe wird erfindungsgemäß durch die kennzeichnenden Merkmale des Anspruchs 1 gelöst. Auf diese Weise wird erreicht, dass die durchlaufende Gutmatte zwar aufgelockert wird, dies jedoch auf sehr schonende Weise erfolgt.

Auf konstruktiv einfache Art und Weise sind dabei mindestens zwei Rahmenteile über Profile miteinander verbunden, die in Umfangsrichtung des Abscheidekorbes verlaufende Einschnitte haben, in die die als Stangen ausgebildeten Stege eingelegt und dort fixiert sind. Um zu verhindern, dass bei einer solchen Ausbildung die Winkelprofile den Durchfluß der Gutmatte störend beeinflussen, sind die als Stangen ausgebildeten Stege weniger weit in die Einschnitte der Winkelprofile eingelegt, als ihre Höhe beträgt.

Weitere Merkmale der Erfindung sind in den Unteransprüchen näher definiert.

Im folgenden soll die Erfindung anhand mehrerer Figuren näher erläutert werden. Dabei zeigt:

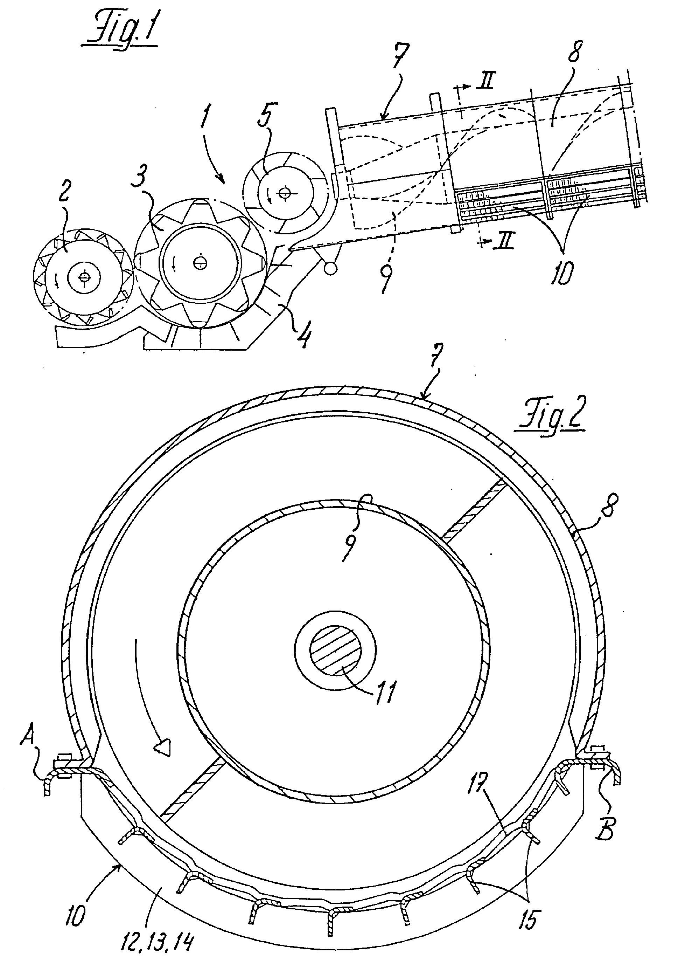

- Figur 1: den vorderen abscheidewirksamen Teil eines Mähdreschers in der Seitenansicht,
- Figur 2: eine stark vergrößerte Darstellung nach der Schnittlinie II - II aus Figur 1,
- Figur 3: den Abscheidekorb in perspektivischer Darstellung,
- Figur 4: den Abscheidekorb in perspektivischer Darstellung aus einem anderen Blickwinkel heraus,
- Figur 5: einen Teil des Abscheidekorbes in vergrößerter Darstellung,
- Figur 6: eine Darstellung gemäß der Schnittlinie VI - VI aus Figur 5,
- Figur 7: einen Montageschritt bei der Herstellung des erfindungsgemäßen Abscheidekorbes,
- Figur 8: einen Abscheidekorb perspektivisch in abgeänderter Form und
- Figur 9: einen Ausschnitt aus dem Abscheidekorb gemäß Figur 8.

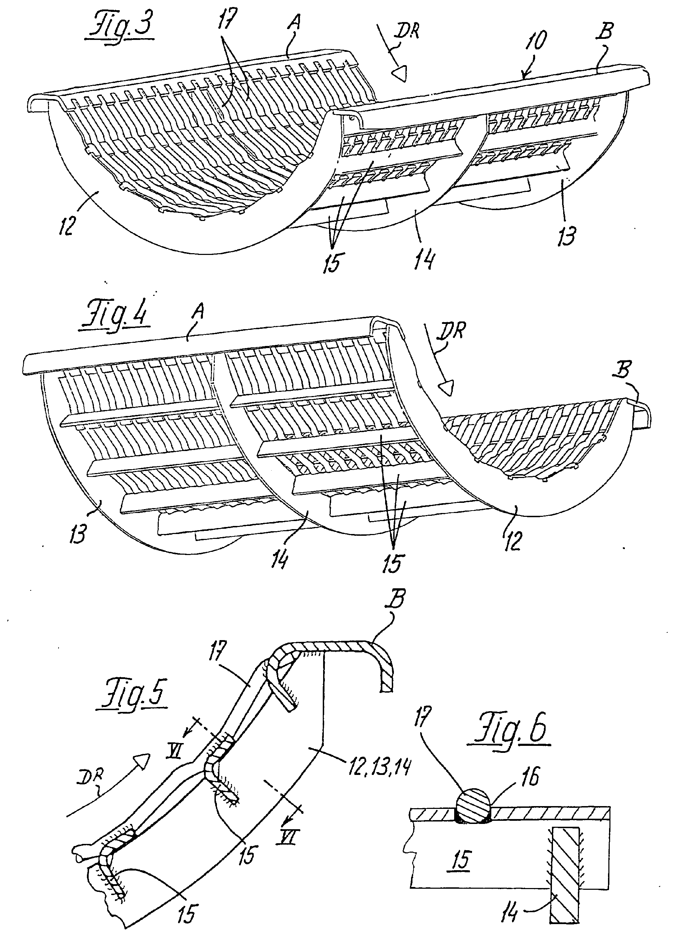

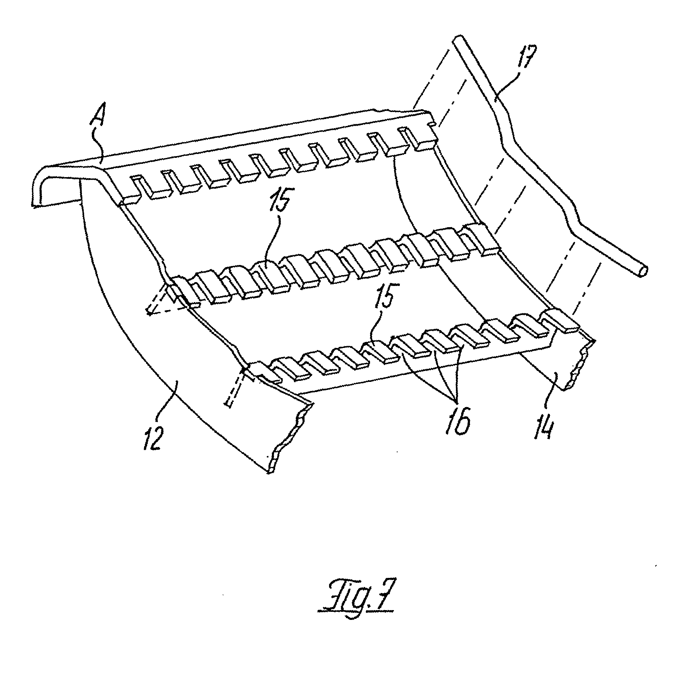

Mit 1 ist ganz allgemein der vordere abscheidewirksame Teil eines Mähdreschers bezeichnet. Er besteht beispielsweise im wesentlichen aus einer Einlegetrommel 2, einer Dreschtrommel 3 mit dem zugehörigen Dreschkorb 4 und einer Übergabetrommel 5. Dieser Übergabetrommel 5 ist eine Axial-Trenn-Einrichtung 7 nachgeordnet, die ein Rotorgehäuse 8 aufweist, in dem der Trennrotor 9 mit seiner Rotorachse 11 antreibbar gelagert ist. Im unteren Bereich weist das Rotorgehäuse 8 Abscheidekörbe 10 auf. Wie insbesondere aus den Figuren 3 und 4 deutlich hervorgeht, besteht jeder Korb aus zwei bogenförmig verlaufenden endseitigen Rahmenteilen 12 und 13 und aus einem mittleren, ebenfalls bogenförmig gebogenem Rahmenteil 14. An ihren Enden sind die Rahmenteile 12, 13, 14 durch stabile Profilschienen A und B miteinander verschweißt. Mit diesem Grundrahmen sind Winkelprofile 15 fest verbunden. Die Lage der Winkelprofile 15 ist dabei so getroffen, dass jeweils einer der beiden Schenkel in Durchlaufrichtung des Gutes verläuft. Wie insbesondere aus Figur 7 zu erkennen ist, sind diese in Gutdurchlaufrichtung verlaufenden Stege mit Einschnitten 16 versehen. In diese Einschnitte 16 werden mehrfach stufig abgebogene Drähte 17 eingelegt und von unten verschweißt, wie dies die Figur 6 zeigt. Aus dieser Figur 6 ebenso wie aus der Figur 5 geht hervor, dass die Drahtstangen 17 nur soweit in die Einschnitte 16 eingelegt sind, dass sie die Winkelprofile 15 nach oben überragen. Auf diese Weise wird verhindert, dass die Winkelprofile 15 störend in den Gutfluß hineinragen.

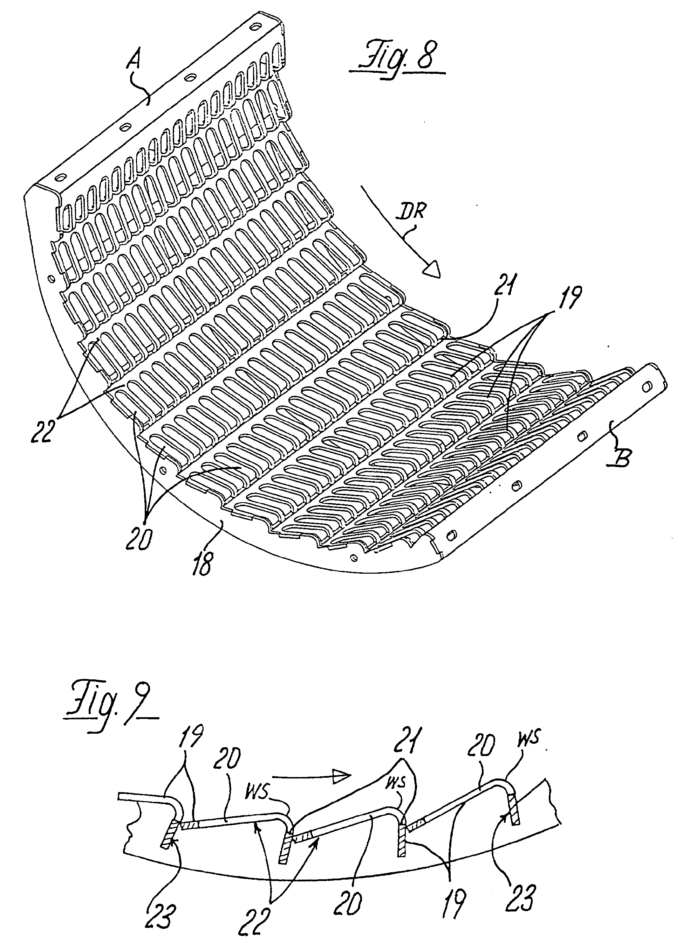

Eine andere Ausführungsform eines Abscheidekorbes zeigen die Figuren 8 und 9. Dieser Korb besteht ebenfalls aus einem Grundrahmen der bereits beschriebenen Art mit den Rahmenteilen 12, 13, 14 sowie den Profilschienen A und B.

Dieser Grundrahmen wird jedoch von ungleichschenkeligen, winkelförmig gebogenen Lochblechen 19 ausgefüllt, die so in den Grundrahmen eingelegt sind, dass sie mit ihren "Winkelspitzen" WS eine Vielzahl von Stufen bilden, die sich lückenlos aneinanderreihen und so den eigentlichen Siebboden des Korbes bilden. Die streifenförmigen Lochbleche19 sind beispielsweise so angeordnet, dass sie sich mit ihren Hauptkörperachsen parallel zur Achse 11 des Trennrotors ertrecken. Die in Reihe , dicht nebeneinander liegenden Löcher sind als Langlöcher 20 ausgebildet welche, die "Winkelspitzen"WS mit einbezogen, beide Schenkel 22 und 23 des Winkelprofils einmal mehr und einmal weniger durchdringen. Die in Durchlaufrichtung DR betrachteten, hinteren Enden der Langlöcher 20 weisen gerade, parallel zur Rotorachse verlaufende Kanten 21 auf. Wie aus den Figuren 8 und 9 zu erkennen ist, liegen die in Umfangsrichtung verlaufenden Schenkel 22 abstandsfrei an den jeweils benachbarten radial nach unten abgebogenen Schenkel 23 derart an, dass die Kanten 21 eines jeden Bleches 19 mit dem frei auslaufenden Schenkel 22 des benachbarten Bleches 19 auf einer Höhe liegen und eine gerade Linie bilden. Durch diese Maßnahme einerseits und dadurch, dass die Langlöcher 20 bis in die radial verlaufenden, nach unten abgewinkelten Schenkel der Bleche geführt sind kann sich kein Halmgut in den auslaufseitigen Enden der_Lochungen 20 verfangen, was zwangsläufig zu erheblichen Störungen im Gufluß führen würde und eine ungewünscht starke Zerkleinerung des Halmgutes nach sich ziehen würde.

### Bezugszeichenliste

- 1): Teil eines Mähdreschers
- 2) -: Einlegetrommel
- 3) -: Dreschtrommel
- 4) -: Dreschkorb
- 5) -: Übergabetrommel
- 7) -: Axial-Trenneinrichtung
- 8) -: Rotorgehäuse
- 9) -: Trennrotor
- 10) -: Abscheidekörbe
- 11) -: Rotorachse
- 12) -: Rahmenteil
- 13) -: Rahmenteil
- 14) -: Rahmenteil
- 15) -: Winkelprofile
- 16) -: Einschnitte
- 17) -: Drahtstangen
- 18) -: Rahmenteil
- 19) -: Lochbleche
- 20) -: Löcher
- 21) -: Kanten
- 22) -: Schenkel
- 23) -: Schenkel
- A) -: Profilschienen
- B) -: Profilschienen
- WS) -: Winkelspitzen

## Patentansprüche

1. Vorrichtung zum Abscheiden von Korn aus einer Erntegutmatte, bestehend aus einem Rotor (9) und einem diesen bereichsweise und mit Abstand umgebenden Abscheidekorb, der zumindest zwei bogenförmige Rahmenteile (12,13) aufweist, die miteinander über parallel zur Rotorachse erstreckende Profile verbunden sind, welche quer zur Rotortachse und mit Abstand zueinander verlaufende , ein Sieb bildende Stege (17) aufweisen,
**dadurch gekennzeichnet,**
**dass** die ein Sieb bildenden Stege (17) in Rotationsrichtung gesehen stufig abgebogen und in Rotationsrichtung betrachtet einstückig ausgebildet sind.

2. Vorrichtung nach Anspruch 1,
**dadurch gekennzeichnet,**
**dass** die Stege (17) mehrfach stufig abgebogen sind.

3. Vorrichtung nach den Ansprüchen 1 und 2,
**dadurch gekennzeichnet,**
**dass** die, mindestens zwei Rahmenteile (12) und (13) über Profile (15) miteinander verbunden sind, die in Umfangsrichtung des Abscheidekorbes (10) verlaufenden Einschnitte (16) aufweisen, in die die als Stangen ausgebildeten Stege (17) eingelegt und dort fixiert sind.

4. Vorrichtung nach Anspruch 3,
**dadurch gekennzeichnet,**
**dass** die Stangen (17) weniger weit in die Einschnitte (16) eingelegt sind als ihre Höhe beträgt.

5. Vorrichtung nach den Ansprüchen 3 und 4,
**dadurch gekennzeichnet,**
**dass** die Stangen (17) mit den Profilen (15) verschweißt sind.

6. Vorrichtung nach den Ansprüchen 1 bis 5,
**dadurch gekennzeichnet,**
**dass** die Stangen (17) aus drahtartigem Grundmaterial bestehen.

7. Vorrichtung nach den Ansprüchen 3 bis 6,
**dadurch gekennzeichnet,**
**dass** die Stangen (17) im Bereich ihrer Befestigung mit den Profilen (15) parallel zu der der Rotorachse zugewandten Fläche der Profile (15) verlaufen.

8. Vorrichtung nach Ansprüchen 1 bis 3,
**dadurch gekennzeichnet,**
**daß** die der Rotorachse zugewandten Seiten der mindestens zwei Rahmenteile (12 u. 13) entsprechend dem stufigen Verlauf der Stege, ebenfalls stufig ausgebildet sind.

9. Vorrichtung nach dem Oberbegriff des Anspruches 1,
**dadurch gekennzeichnet,**
**daß** der Abscheidekorb aus zumindest zwei Rahmenteilen (18) besteht, die stufig ausgebildet sind und daß auf die Stufen in Umfangsrichtung mit Öffnungen versehene, abgewinkelte Bleche (19) abstandsfrei aufgelegt sind, die die Gut führende Siebfläche bilden.

10. Vorrichtung nach Anspruch 9,
**dadurch gekennzeichnet,**
**daß** die abgewinkelten Bleche (19) die Verbindung der mindestens zwei Rahmenteile (12, 13) sind.

11. Vorrichtung nach den Ansprüchen 9 und 10,
**dadurch gekennzeichnet,**
**daß** die Öffnungen oder Löcher (20) durch beide Schenkel (22 und 23) der jeweiligen Bleche (19) verlaufen.

12. Vorrichtung nach den Ansprüchen 9 bis 11,
**dadurch gekennzeichnet,**
**daß** die in Durchlaufsrichtung hinteren Enden der Löcher (20) gradlinig und parallel zur Rotationsachse verlaufen.

13. Vorrichtung nach den Ansprüchen 9 bis 12,
**dadurch gekennzeichnet,**
**daß** die gradlinig verlaufenden hinteren Lochkanten (21) eines Bleches (19) mit dem ihnen zugewandten, freiauslaufenden Schenkel (22) des anschließenden benachbarten Bleches (19) auf gleicher Höhe liegen und mit ihnen eine gerade Linie bilden.

## Claims

1. Apparatus for separating grain from a crop material mat comprising a rotor (9) and a separating basket which surrounds the rotor region-wise and at a spacing and which has at least two arcuate frame portions (12, 13) which are connected together by way of profile members which extend parallel to the rotor axis and which have legs (17) extending transversely relative to the rotor axis and at a spacing relative to each other and forming a sieve,
**characterised in that**
the legs (17) forming a sieve are bent in a stepped configuration as viewed in the direction of rotation and are in one piece as viewed in the direction of rotation.

2. Apparatus according to claim 1 **characterised in that** the legs (17) are bent in a multiply stepped configuration.

3. Apparatus according to claims 1 and 2 **characterised in that** the at least two frame portions (12) and (13) are connected together by way of profile members (15) which have notches (16) which extend in the peripheral direction of the separating basket (10) and into which the legs (17) which are in the form of bars are inserted and are fixed therein.

4. Apparatus according to claim 3 **characterised in that** the bars (17) are inserted into the notches (16) to a lesser distance than their height.

5. Apparatus according to claims 3 and 4 **characterised in that** the bars (17) are welded to the profile members (15).

6. Apparatus according to claims 1 to 5 **characterised in that** the bars (17) comprise wire-like base material.

7. Apparatus according to claims 3 to 6 **characterised in that** the bars (17) extend in the region of their fixing to the profile members (15) parallel to the surface of the profile members (15), which faces towards the rotor axis.

8. Apparatus according to claims 1 to 3 **characterised in that** the sides which are towards the rotor axis of the at least two frame portions (12 and 13) are also of a stepped configuration corresponding to the stepped configuration of the legs.

9. Apparatus according to the classifying portion of claim 1 **characterised in that** the separating basket comprises at least two frame portions (18) which are of a stepped configuration and that angled plates (19) provided with openings in the peripheral direction are laid without spacings on the steps, the plates forming the sieve surfaces for guiding material.

10. Apparatus according to claim 9 **characterised in that** the angled plates (19) are the connection of the at least two frame portions (12, 13).

11. Apparatus according to claims 9 and 10 **characterised in that** the openings or holes (20) extend through both limbs (22 and 23) of the respective plates (19).

12. Apparatus according to claims 9 to 11 **characterised in that** the ends of the holes (20), which are the rear ends in the through-flow direction, extend in a straight line and parallel to the axis of rotation.

13. Apparatus according to claims 9 to 12 **characterised in that** the rear hole edges (21), extending in a straight line, of a plate (19) are at the same height as the freely terminating limb (22) which faces towards it of the adjoining adjacent plate (19) and form a straight line with them.

## Revendications

1. Dispositif pour la séparation du grain dans un flux de produit récolté, formé d'un rotor (9) et d'une grille de séparation qui enveloppe partiellement le rotor, à distance de celui-ci, et comporte au moins deux éléments de cadre (12, 13) cintrés, liés entre eux par des profilés qui s'étendent parallèlement à l'axe du rotor et portent des cloisons (17) espacées, qui s'étendent transversalement à l'axe du rotor pour former un tamis, **caractérisé par le fait que** les cloisons (17) qui forment un tamis, vu dans direction de rotation, sont courbées pour former des gradins et, vu dans la direction de rotation, sont réalisées d'une pièce.

2. Dispositif selon la revendication 1, **caractérisé par le fait que** les cloisons (17) sont courbées plusieurs fois pour former des gradins.

3. Dispositif selon les revendications 1 et 2, **caractérisé par le fait que** les éléments de cadre (12) et (13), au nombre d'au moins deux, sont liés entre eux par des profilés (15) qui présentent des échancrures (16) orientées dans la direction périphérique de la grille de séparation (10), dans lesquelles les cloisons (17) conformées en barres sont insérées et fixées.

4. Dispositif selon la revendication 3, **caractérisé par le fait que** la pénétration des barres (17) dans les échancrures (16) est inférieure à leur hauteur.

5. Dispositif selon les revendications 3 et 4, **caractérisé par le fait que** les barres (17) sont soudées aux profilés (15).

6. Dispositif selon les revendications 1 à 5, **caractérisé par le fait que** les barres (17) sont réalisées à partir d'un matériau de base en forme de fil.

7. Dispositif selon les revendications 3 à 65, **caractérisé par le fait que** les barres (17), dans la région de leur fixation aux profilés (15), s'étendent parallèlement à la surface des profilés (15) tournée vers l'axe de rotor.

8. Dispositif selon les revendications 1 à 3, **caractérisé par le fait que** les faces tournées vers l'axe de rotor des éléments de cadre (12, 13), au nombre d'au moins deux, sont également conformées en gradins en accord avec le profil en gradins des cloisons.

9. Dispositif selon le préambule de la revendication 1, **caractérisé par le fait que** la grille de séparation comprend au moins deux éléments de cadre (18) pourvus de gradins et que sur les gradins sont disposées des tôles (19) pourvues d'ouvertures, pliées dans la direction périphérique, qui constituent la surface de tamis traitant le produit.

10. Dispositif selon la revendication 9, **caractérisé par le fait que** les tôles pliées (19) forment la liaison entre les élément de cadre (12, 13) au nombre d'au moins deux.

11. Dispositif selon les revendications 9 et 10, **caractérisé par le fait que** les ouvertures ou les trous (20) s'étendent entre deux ailes des tôles (19) concernées.

12. Dispositif selon les revendications 9 à 11, **caractérisé par le fait que** les extrémités arrière des trous (20), vu dans la direction de rotation sont rectilignes et s'étendent parallèlement à l'axe de rotation.

13. Dispositif selon les revendications 9 à 12, **caractérisé par le fait que** les bords arrières (21) rectilignes des trous d'une tôle (19) sont situés à la même hauteur que l'aile libre (22) tournée vers eux de la tôle (19) voisine et forment une ligne droite avec celle-ci.
